Europäisches Patentamt

European Patent Office

Office européen des brevets

(11) Veröffentlichungsnummer: **0 315 225**
**B1**

(12) **EUROPÄISCHE PATENTSCHRIFT**

(45) Veröffentlichungstag der Patentschrift: **06.02.91**

(21) Anmeldenummer: **88201637.1**

(22) Anmeldetag: **29.07.88**

(51) Int. Cl.⁵: **C 01 B 17/04**

(54) Verfahren zum Verbrennen eines schwefelwasserstoffhaltigen Gases.

(30) Priorität: **16.10.87 DE 3735002**

(43) Veröffentlichungstag der Anmeldung:
**10.05.89 Patentblatt 89/19**

(45) Bekanntmachung des Hinweises auf die
Patenterteilung:
**06.02.91 Patentblatt 91/06**

(84) Benannte Vertragsstaaten:
**AT BE DE ES FR GB GR IT NL SE**

(56) Entgegenhaltungen:
**CA-A-1 004 832**
**DE-C-3 430 015**
**US-A-3 963 443**

(73) Patentinhaber: **METALLGESELLSCHAFT AG**
**Reuterweg 14 Postfach 3724**
**D-6000 Frankfurt/M.1 (DE)**

(72) Erfinder: **Fischer, Herbert**
**Holzmühlerweg 67**
**D-6304 Lollar (DE)**
Erfinder: **Kriebel, Manfred, Dr.**
**Tirolerstrasse 61**
**D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 315 225 B1

## EP 0 315 225 B1

**Beschreibung**

Die Erfindung betrifft ein Verfahren zum Verbrennen eines H$_2$S-haltigen Einsatzgases mit Sauerstoff und Luft in mindestens einem Brenner, der in eine Brennkammer mündet, zum Erzeugen eines H$_2$S und SO$_2$ enthaltenden Gasgemisches zur Umwandlung in Elementarschwefel nach dem Claus-Verfahren, wobei man durch das Zentralrohr des Brenners Sauerstoff, durch mindestens ein das Zentralrohr koaxial umgebendes zweites Rohr das H$_2$S-haltige Einsatzgas und durch ein koaxiales äußeres Rohr Luft in die Brennkammer leitet.

Ein solches Verfahren mit der zugehörigen Apparatur ist im deutschen Patent 34 30 015 beschrieben. Dabei arbeitet man bei relativ niedrigen Temperaturen und niedrigen Strömungsgeschwindigkeiten der Gase im Mündungsbereich des Brenners. Der Erfindung liegt die Aufgabe zugrunde, ein H$_2$S-haltiges Einsatzgas verarbeiten zu können, das auch Kohlenwasserstoffe oder CO$_2$ enthält. Dies geschieht beim eingangs genannten Verfahren erfindungsgemäß dadurch, daß man dem Brenner ein H$_2$S-haltiges Einsatzgas aufgibt, dessen Gehalt an Kohlenwasserstoffen oder CO$_2$ mindestens 5 Vol.% beträgt, daß man an der Mündung des Brenners eine Strömungsgeschwindigkeit des Sauerstoffs von 50 bis 250 m/sec und des H$_2$S-haltigen Einsatzgases von 10 bis 30 m/sec einstellt, daß man in der Kernzone der Brennerflamme Temperaturen im Bereich von 2000 bis 3000°C erzeugt und daß man aus der Brennkammer ein Gasgemisch mit Temperaturen von 1350 bis 1650°C abzieht, das mindestens 2 Vol.% CO und mindestens 8 Vol.% H$_2$ aufweist.

Durch die hohen Temperaturen in der Brennerflamme wird in erheblichem Maß Kohlendioxid zu Kohlenmonoxid und Sauerstoff gespalten, auch wird Wasser teilweise in Wasserstoff und Sauerstoff zerlegt. Dadurch wird der zum Aufrechterhalten der hohen Temperaturen im Flammenbereich des Brenners und in der Brennkammer benötigte Sauerstoff zum Teil zur Verfügung gestellt, so daß der Gesamtbedarf an Sauerstoff niedrig gehalten werden kann. Der im Produktgasgemisch der Brennkammer vorhandene Wasserstoff ist bei der Weiterbehandlung des Gasgemisches wertvoll, weil Hydrierreaktionen ohne Zugabe von fremdem Wasserstoff möglich werden. Ferner stellen die Gaskomponenten H$_2$ und CO als Synthesegas ein wertvolles Produkt dar.

Eine zweckmäßige Weiterbildung des erfindungsgemäßen Verfahrens besteht darin, daß man das Gasgemisch aus der Brennkammer durch eine Clauszone leitet und dabei H$_2$S und SO$_2$ katalytisch zu Elementarschwefel umwandelt, daß man das Abgas der Clauszone in einer Hydrolysezone hydrierend behandelt und ein Gasgemisch abzieht, das überwiegend aus H$_2$S, H$_2$ und CO besteht, aus welchem man H$_2$S abtrennt. Diese Weiterbehandlungsstufen können in an sich bekannter Weise erfolgen. Einzelheiten dieser Verfahrensstufen sind in der DE—OS 34 15 722 sowie im dazu korrespondierenden US-Patent 4 632 819 und in Ullmanns Encyklopädie der technischen Chemie, 4. Auflage (1982), Band 21, Seiten 8—26, beschrieben.

Ausgestaltungsmöglichkeiten des Verfahrens werden mit Hilfe der Zeichnung erläutert. Es zeigt:

Fig. 1 die Brennkammer im Längsschnitt in schematischer Dartsellung,

Fig. 2 den Mündungsbereich eines Brenners im Längsschnitt und

Fig. 3 ein Fließbild für die Gasbehandlung.

Die Brennkammer (1) weist mehrere Brenner (2, 3) sowie eine an sich bekannte Stützfeuerung (4) auf. Dem Brenner (2) wird durch die Leitung (6) Sauerstoff, durch die Leitung (7) das Einsatzgas und durch die Leitung (8) Luft zugeführt. Wegen der besseren Übersichtlichkeit wurden die gleichen Zuleitungen zum Brenner (3) weggelassen. Der Stützfeuerung (4) führt man durch die Leitung (10) gasförmigen Brennstoff und durch die Leitung (11) Luft zu.

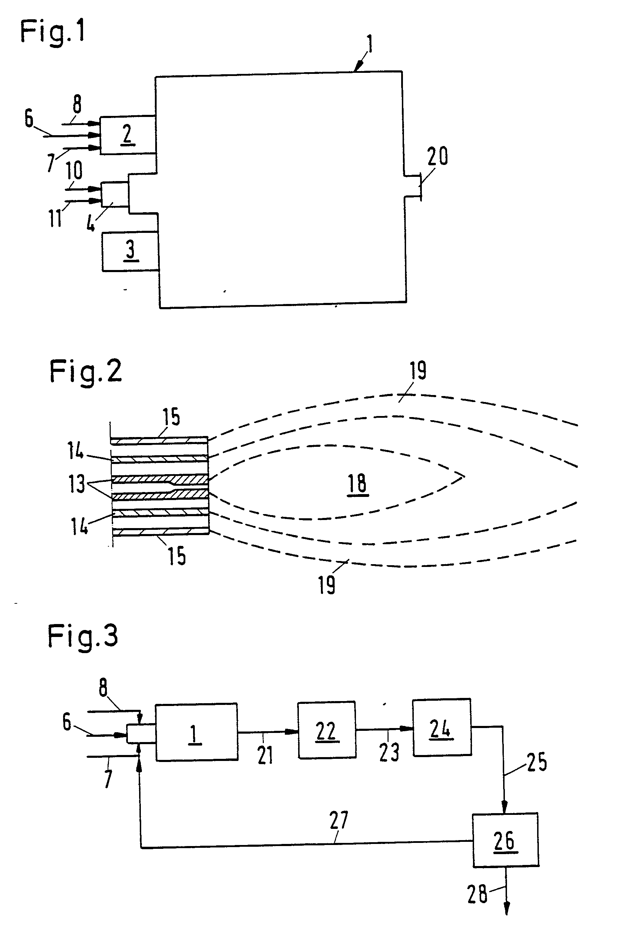

Der Mündungsbereich eines Brenners besteht aus konzentrischen Rohren, die in Fig. 2 zu sehen sind. Durch das an der Mündung verengte Zentralrohr (13) strömt der Sauerstoff und verläßt das Rohr mit Strömungsgeschwindigkeiten von 50 bis 250 m/sec. Das Zentralrohr (13) umgibt ein zweites Rohr (14), durch welches das Einsatzgas in die Verbrennung geleitet wird. Das Einsatzgas enthält neben H$_2$S noch mindestens 5 Vol. % an Kohlenwasserstoffen oder CO$_2$. Die Strömungsgeschwindigkeit des Einsatzgases beträgt beim Verlassen des zweiten Rohrs 10 bis 30 m/sec. Durch das äußere Rohr (15) wird Luft herangeführt.

Durch die Brenneranordnung sowie die Gase und ihre Strömungsgeschwindigkeiten entsteht eine Flammenstruktur, welche die erwünschten Reaktionen begünstigt. In der Kernzone (18) der Brennerflamme liegen die Temperaturen im Bereich von 2000 bis 3000°C und vorzugsweise mindestens 2300°, wodurch die Umwandlung von CO$_2$ in CO und Sauerstoff sowie die thermische Zersetzung von Wasser begünstigt wird. Die Lufthülle (19), welche den heißen Bereich der Flamme umgibt, schützt durch ihre relativ niedrigen Temperaturen die Ausmauerung der Brennkammer und wirkt der Abkühlung des Kernberiches (18) der Flamme entgegen. In der Lufthülle (19) der Flamme liegen die Temperaturen etwa im Bereich von 800 bis 1300°C. In der Nähe des Auslasses (20) der Brennkammer stellen sich Temperaturen von etwa 1350 bis 1650°C ein. Das Gasgemisch mit diesen Temperaturen weist mindestens 2 Vol. % Kohlenmonoxid und mindestens 8 Vol. % Wasserstoff auf. Dieses Gasgemisch enthält nun auch SO$_2$, welches durch Verbrennung eines Teils des H$_2$S entstanden ist.

Gemäß Fig. 3 wird das Gasgemisch aus der Brennkammer (1) durch die Leitung (21) zu einer Clausanlage (22) geführt, wo an Katalysatoren bei Temperaturen von zunächst etwa 320 bis schließlich etwa 200°C H$_2$S mit SO$_2$ zu Elementarschwefel in bekannter Weise umgesetzt wird. Die bekannten

2

Katalysatoren bestehen z.B. im wesentlichen aus $TiO_2$ und $Al_2O_3$, die in verschiedenen Festbetten angeordnet sind. Das Abgas der Clausanlage gelangt in der Leitung (23) zu einer Hydrolysezone (24), in welcher die im Gasgemisch vorhandenen Komponenten hydrolisierend und hydrierend behandelt werden. Da das Abgas genügend Wasserstoff enthält, ist es nicht erforderlich, für diese Hydrierung fremden Wasserstoff heranzuführen.

Zur Hydrolysezone und der darin gleichzeitig erfolgenden Hydrierung ist folgendes zu erläutern: Über einen Katalysator, der z.B. aus $Al_2O_3$ als Träger und einer Co- und Mo-Imprägnierung besteht, werden restliches COS und $CS_2$ mit Wasserdampf zu $H_2S$ hydrolysiert. Gleichzeitig werden restlicher Elementarschwefel und $SO_2$ mit Wasserstoff zu $H_2S$ hydriert. Die Hydrolyse und die Hydrierung erfolgen am gleichen Katalysator, der im Festbett angeordnet ist, bei Temperaturen von etwa 300 bis 350°C. Das behandelte Gas besteht nun noch im wesentlichen aus $H_2S$, $N_2$, CO und $H_2$. Dieses Gasgemisch führt man durch die Leitung (25) einer Trennanlage (26) zu, in welcher man z.B. durch chemische Absorption z.B. mittels Methyldiethylenaminen (MDEA) $H_2S$ abtrennt. Abgetrenntes $H_2S$ führt man in der Leitung (27) zurück zur Brennkammer (1), CO, $H_2$ und $N_2$ stehen als Gasgemisch zur Weiterverwendung in der Leitung (28) zur Verfügung.

Beispiele

Ein Einsatzgas mit der Zusammensetzung, trocken gerechnet,

| | |
|---|---|
| $H_2S$ | 86,0 Vol. % |
| CO | 0,2 Vol. % |
| $CH_4$ | 1,0 Vol. % |
| $CO_2$ | 10,7 Vol. % |
| $N_2$ | 2,0 Vol. % |
| $H_2$ | 0,1 Vol. % |

wird einer Brennkammer mit vier Brennern zugeführt. In den Fällen A, B und C verbrennt man dieses Einsatzgas teilweise mit unterschiedlichen Luft-Sauerstoff-Verhältnissen. Der verwendete technisch reine Sauerstoff hat beim Austritt aus dem jeweiligen Brenner eine Strömungsgeschwindigkeit von 150 bis 200 m/sec, die Strömungsgeschwindigkeit des Einsatzgases liegt an der Brennermündung bei 20 bis 25 m/sec. Soweit in den nachfolgenden Tabellen Mengen angegeben sind, beziehen sie sich auf 1000 $Nm^3$ trockenes Einsatzgas.

| | A | B | C |
|---|---|---|---|
| Luftmenge ($Nm^3$) | 438 | 182 | 105 |
| Sauerstoffmenge ($Nm^3$) | 254 | 296 | 309 |
| Stickstoff-Sauerstoff-Volumenverhältnis | 1:1 | 0,4:1 | 0,25:1 |
| Brennkammer-Temperatur am Auslaß (°C) | 1427 | 1480 | 1497 |
| Maximale Flammentemperatur (°C) | 2500 | 2600 | 2800 |

Das die Brennkammer (1) verlassende Gasgemisch hat folgende Zusammensetzung (Vol. %):

EP 0 315 225 B1

|  | A | B | C |
|---|---|---|---|
| $H_2S$ | 8,3 | 9,5 | 9,9 |
| $SO_2$ | 4,8 | 5,5 | 5,7 |
| $H_2O$ | 41,0 | 46,6 | 48,6 |
| COS | 0,8 | 0,9 | 1,0 |
| $CS_2$ | 0,2 | 0,3 | 0,3 |
| CO | 3,5 | 4,5 | 4,8 |
| $CO_2$ | 3,6 | 3,8 | 3,9 |
| $H_2$ | 10,9 | 14,2 | 15,4 |
| $N_2$ | 25,0 | 13,0 | 8,6 |
| weitere Schwefelverbindungen | 1,9 | 1,7 | 1,8 |
|  | 100,0 | 100,0 | 100,0 |
| Gasmenge: ohne Elementarschwefel ($Nm^3$) | 1436 | 1232 | 1172 |
| mit Elementarschwefel ($Nm^3$) | 1761 | 1558 | 1498 |

Dieses Gasgemisch wird einer zweistufigen Clausgaskatalyse unterworfen, wobei man als Katalysatoren in der ersten Stufe $TiO_2$ und in der zweiten Stufe $Al_2O_3$ verwendet. Dabei gewinnt man 97% des Schwefels zurück.

Das Abgas der Clausgaskatalyse wird hydriert und hydrolysiert, wobei man folgendermaßen arbeitet: Das Gasgemisch wird auf 320°C aufgeheizt und einem Reaktor zugeführt, in welchem die Hydrierung und Hydrolyse über ein und demselben Katalysator ($Al_2O_3$ imprägniert mit Co und Mo) erfolgt. In dem so behandelten Gasgemisch liegen alle Schwefelverbindungen nur noch als $H_2S$ vor; das bei den Umsetzungen gebildete Wasser wird bis auf 4 Vol. % entfernt. Aus dem Gasgemisch entfernt man anschließend in einer Trennanlage mittels MDEA nach dem Sulften-Verfahren der Firma Ford, Bacon and Davis Inc., Dallas (USA), das $H_2S$ bis auf etwa 10 Vol.-ppm und erhält ein Restgas in der Leitung (28) mit folgender Zusammensetzung:

|  | A | B | C |
|---|---|---|---|
| $H_2$ | 19,1 | 29,7 | 34,8 |
| CO | 6,9 | 10,5 | 12,2 |
| $CO_2$ | 8,9 | 11,1 | 12,2 |
| $N_2$ | 61,1 | 44,7 | 36,8 |
| $H_2O$ | 4,0 | 4,0 | 4,0 |

Dieses Gasgemisch, insbesondere der Beispiele B und C, kann z.B. bei der hydrierenden Entschwefelung von Erdölprodukten oder als Heizgas verwendet werden.

**Patentansprüche**

1. Verfahren zum Verbrennen eines $H_2S$-haltigen Einsatzgases mit Sauerstoff und Luft in mindestens einem Brenner, der in eine Brennkammer mündet, zum Erzeugen eines $H_2S$ und $SO_2$ enthaltenden Gasgemisches zur Umwandlung in Elementarschwefel nach dem Claus-Verfahren, wobei man durch das Zentralrohr des Brenners Sauerstoff, durch mindestens ein das Zentralrohr koaxial umgebendes zweites Rohr das $H_2S$-haltige Einsatzgas und durch ein koaxiales äußeres Rohr Luft in die Brennkammer leitet, dadurch gekennzeichnet, daß man dem Brenner ein $H_2S$-haltiges Einsatzgas aufgibt, dessen Gehalt an Kohlenwasserstoffen oder $CO_2$ mindestens 5 Vol. % beträgt, daß man an der Mündung des Brenners eine Strömungsgeschwindigkeit des Sauerstoffs von 50 bis 250 m/sec und des $H_2S$-haltigen Einsatzgases von 10

4

bis 30 m/sec einstellt, daß man in der Kernzone der Brennerflamme Temperaturen im Bereich von 2000 bis 3000°C erzeugt und daß man aus der Brennkammer ein Gasgemisch mit Temperaturen von 1350 bis 1650°C abzieht, das mindestens 2 Vol. % CO und mindestens 8 Vol. % $H_2$ aufweist.

2. Verfahren nach Anspruch 1, dadurch gekennzeichnet, daß man das Gasgemisch aus der Brennkammer durch eine Clauszone leitet und dabei $H_2S$ und $SO_2$ katalytisch zu Elementarschwefel umwandelt, daß man das Abgas der Clauszone in einer Hydrolysezone hydrierend behandelt und ein Gasgemisch abzieht, das überwiegend aus $H_2S$, $H_2$ und CO besteht, aus welchem man $H_2S$ abtrennt.

3. Verfahren nach Anspruch 2, dadurch gekennzeichnet, daß man das aus dem Gasgemisch abgetrennte $H_2S$ in den Brenner leitet.

## Revendications

1. Procédé de combustion d'un gaz de charge contenant du $H_2S$ avec de l'hydrogène et de l'air dans au moins un brûleur qui débouche dans une chambre de combustion, pour produire un mélange gazeux contenant $H_2S$ et $SO_2$ et destiné à être transformé en soufre élémentaire par le procédé Claus, qui consiste à envoyer dans la chambre de combustion de l'oxygène, par le tube central du brûleur, le gaz de charge, contenant du $H_2S$, par au moins un deuxième tube entourant coaxialement le tube central et de l'air, par un tube extérieur coaxial, caractérisé en ce qu'il consiste à charger, dans le brûleur, un gaz de charge contenant du $H_2S$ dont la teneur en hydrocarbures ou en $CO_2$ représente au moins 5% en volume, à régler la vitesse d'écoulement de l'oxygène à l'embouchure du brûleur entre 50 et 250 m/s et celle du gaz de charge contenant du $H_2S$ entre 10 et 30 m/s, à produire, dans la zone de coeur de la flamme du brûleur, des températures comprises entre 2000 et 3000°C, et à soutirer, de la chambre de combustion, un mélange gazeux ayant des températures de 1350 à 1650°C, qui comprend au moins 2% en volume de CO et au moins 8% en volume de $H_2$.

2. Procédé suivant la revendication 1, caractérisé en ce qu'il consiste à envoyer le mélange gazeux sortant de la chambre de combustion dans une zone de Claus, et à transformer ainsi catalytiquement $H_2S$ et $SO_2$ en soufre élémentaire, à hydrolyser l'effluent gazeux de la zone de Claus dans une zone d'hydrolyse, et à soutirer un mélange gazeux constitué principalement de $H_2S$ de $H_2$ et de CO, dont on sépare $H_2S$.

3. Procédé suivant la revendication 2, caractérisé en ce qu'il consiste à envoyer au brûleur le $H_2S$ séparé du mélange gazeux.

## Claims

1. Process for burning an $H_2S$-containing charge gas with oxygen and air in at least one burner which opens into a combustion chamber to produce a gas mixture containing $H_2S$ and $SO_2$ for conversion into elemental sulphur according to the Claus process, with oxygen being passed through the central pipe of the burner, the $H_2S$-containing charge gas being passed through at least one second pipe coaxially surrounding the central pipe and air being passed through a coaxial external pipe into the combustion chamber, characterised in that the burner is charged with an $H_2S$-containing charge gas, the content of hydrocarbons or $CO_2$ of which is at least 5% by volume, that a flow rate of the oxygen of 50 to 250 m/sec and of the $H_2S$-containing charge gas of 10 to 30 m/sec is set at the mouth of the burner, that temperatures in the range of 2000 to 3000°C are generated in the core of the burner flame and that a gas mixture with temperatures of 1350 to 1650°C and which has at least 2% by volume CO and at least 8% by volume $H_2$ is removed from the combustion chamber.

2. Process according to Claim 1, characterized in that the gas mixture is passed out of the combustion chamber through a Claus zone and thereby $H_2S$ and $SO_2$ are catalytically converted into elemental sulphur, that the waste gas from the Claus zone is subjected to hydrogenating treatment in a hydrolysis zone and a gas mixture is removed which predominantly consists of $H_2S$, $H_2$ and CO, from which $H_2S$ is separated.

3. Process according to Claim 2, characterised in that the $H_2S$ separated from the gas mixture is passed into the burner.

# Fig.1

# Fig.2

# Fig.3